Europäisches Patentamt

European Patent Office

Office européen des brevets

(19)

(11) Veröffentlichungsnummer : **0 096 154**
**B1**

(12) **EUROPÄISCHE PATENTSCHRIFT**

(45) Veröffentlichungstag der Patentschrift :
07.09.88

(21) Anmeldenummer : 83101690.2

(22) Anmeldetag : 22.02.83

(51) Int. Cl.⁴ : **B 60 J   3/02**

(54) Sonnenblende, insbesondere für Fahrzeuge.

(30) Priorität : 12.06.82 DE 3222194

(43) Veröffentlichungstag der Anmeldung :
21.12.83 Patentblatt 83/51

(45) Bekanntmachung des Hinweises auf die Patenterteilung : 07.09.88 Patentblatt 88/36

(84) Benannte Vertragsstaaten :
DE FR GB IT SE

(56) Entgegenhaltungen :
DE-A- 2 725 430
DE-A- 2 730 926
US-A- 3 375 364

(73) Patentinhaber : Gebr. Happich GmbH
Postfach 10 02 49 Clausenbrücke 1
D-5600 Wuppertal 1 (DE)

(72) Erfinder : Schwanitz, Konrad, Dr.
Brockenbergstrasse 31
D-5820 Gevelsberg (DE)
Erfinder : Mahler, Gert
Kreuzstrasse 5
D-5608 Radevormwald (DE)

EP 0 096 154 B1

## Beschreibung

Die Erfindung bezieht sich auf eine Sonnenblende, insbesondere für Fahrzeuge, mit einem Sonnenblendenkörper, der mit einem Spiegel und zumindest einer Lichtquelle ausgerüstet ist.

Sonnenblenden werden häufig, insbesondere für Fahrzeuge der gehobenen Ausstattungsklasse mit einem Spiegel und mit einer Beleuchtungseinrichtung ausgerüstet. Der Spiegel dient vornehmlich als Make-up-Spiegel und kann durch die Beleuchtungseinrichtung auch bei Dunkelheit benutzt werden. Bei einer durch die DE-A-27 25 430 bekanntgewordenen Sonnenblende ist der im Sonnenblendenkörper angeordnete Spiegel zwischen zwei ihn beidseitig flankierenden Lichtquellen plaziert. Bei einer anderen bekannten Sonnenblende nach der DE-A-27 30 926 sitzt der Spiegel in einem im Sonnenblendenkörper eingelassenen Rahmen, der lichtdurchlässig ausgebildet ist und von Lichtquellen hinterleuchtet werden kann. Bei diesen bekannten Sonnenblenden kann für die Beleuchtungseinrichtung in bezug auf die Blendung nur ein Kompromiß eingegangen werden, wobei die Wahlmöglichkeit zwischen einer erhöhten oder einer verminderten Leuchtdichte der Lichtquelle besteht. Bei einer erhöhten Leuchtdichte erreicht man zwar eine ausreichende Ausleuchtung des Gesichts der sich im Spiegel betrachtenden Person, jedoch muß die ausreichende Ausleuchtung des Gesichts mit dem Nachteil einer erhöhten Blendung erkauft werden. Wird andererseits die Leuchtdichte vermindert, so vermindert sich zwar auch die Blendung, jedoch wird dann nachteiligerweise keine ausreichende Ausleuchtung des Gesichts mehr erzielt. Einer anderen denkbaren Möglichkeit, eine einerseits blendungsarme und andererseits ausreichende Gesichtausleuchtung durch eine entsprechende Flächenvergrößerung des den Spiegel aufnehmenden lichtdurchlässigen Rahmens zu erzielen, würden bauliche Grenzen des Sonnenblendenkörpers entgegenstehen.

Der Erfindung liegt hiernach die Aufgabe zugrunde, eine Sonnenblende der eingangs näher bezeichneten Art derart weiterzubilden, daß eine ausreichende Ausleuchtung des Gesichts einer sich im Spiegel betrachtenden Person durch die Lichtquelle bei gleichzeitiger Vermeidung einer Blendung durch die Lichtquelle gewährleistet ist.

Diese Aufgabe wird durch die im Kennzeichen des Patentanspruchs 1 angegebenen Merkmale gelöst.

Während bei den bekannten Vorbildern eine enge Nachbarschaft von Spiegel und Lichtquelle in Form einer zusammengehörenden Baueinheit angestrebt wurde, beschreitet nun die Erfindung einen völlig neuen Weg, indem die aus Spiegel und Lichtquelle bestehenden Einzelelemente nicht nur voneinander getrennt, sondern darüber hinaus relativ zueinander bewegbar am Sonnenblendenkörper angeordnet sind, so daß sich ein großer Abstand zwischen Spiegel und Lichtquelle in der Gebrauchslage ergibt. Damit wird vorteilhafterweise erreicht, daß die blendende Lichtquelle nun nicht mehr unmittelbar in der Sehachse liegt. Bevorzugterweise befindet sich die Lichtquelle in der Gebrauchslage des Spiegels oberhalb desselben. Durch die erfindungsgemäßen Maßnahmen kann eine Lichtquelle mit relativ hohen Leuchtdichtewerten (die natürlich unterhalb der Absolutblendung liegen sollten) eingesetzt werden, die mit Vorteil auch für die Fahrzeuginnenraumbeleuchtung genutzt werden kann.

Eine zweckmäßige Weiterbildung der Erfindung besteht darin, daß der Spiegel von der Lichtquelle wegklappbar am Sonnenblendenkörper gelagert ist. Dabei kann die Anordnung so getroffen sein, daß der Spiegel an der in der Gebrauchslage der Windschutzscheibe zugewandten Breitseite des Sonnenblendenkörpers klappbar angeordnet ist. Diese Ausbildungsform der Erfindung erlaubt es, den Sonnenblendenkörper in seiner am Dachhimmel eines Fahrzeuges befindlichen Nichtgebrauchslage zu belassen und die Einsichtnahme in den Spiegel durch dessen Herunterklappen zu ermöglichen.

Eine alternative Ausführungsform der Erfindung sieht vor, daß der Spiegel an der in der Gebrauchslage von der Windschuzscheibe abgewandten Breitseite des Sonnenblendenkörpers klappbar angeordnet ist. Bei dieser Ausführungsform der Erfindung wird also zunächst der Sonnenblendenkörper um z. B. 90 Winkelgrade heruntergeklappt und dann der Spiegel nach unten geklappt, wobei der Klappweg des Spiegels z. B. 180 Winkelgrade betragen kann. Der Spiegel steht danach den Augen des Betrachters in einer etwa horizontalen Blickrichtung gegenüber, während die Lichtquelle demgegenüber eine relativ hohe Anordnung besitzt, indem sie z. B. im Bereich der mit der Sonnenblendenachse zusammenfallenden Längskante des Sonnenblendenkörpers sitzt. Durch die gegenüber dem Spiegel relativ hohe Anordnung der Lichtquelle befindet sich diese praktisch außerhalb des Sehraumes der sich im Spiegel betrachtenden Person, wodurch eine Blendung durch die Lichtquelle zumindest weitgehend verhindert wird.

Vorteilhafte Weiterbildungen und zweckmäßige Ausgestaltungen der Erfindung sind in den Unteransprüchen gekennzeichnet.

Ausführungsbeispiele der Erfindung werden nachfolgend anhand der Zeichnung näher erläutert. Es zeigen

Fig. 1 ein erstes Ausführungsbeispiel einer mit Spiegel und Lichtquelle ausgerüsteten Sonnenblende und

Fig. 2 bis 7 weitere, jeweils im Schnitt, etwa entsprechend der Schnittlinie A-A nach Fig. 1, dargestellte Ausführungsbeispiele der Sonnenblende.

Die in den Zeichnungen dargestellte Sonnenblende besteht jeweils aus einem Sonnenblendenkörper 1 mit an einem Endbereich ihrer oberen Längskante 2 angeordnetem, aus Gehäuse 3 und

Sonnenblendenachse 4 gebildetem Schwenklager 5 und einer am anderen Endbereich angeordneten Gegenlagerachse 6, die lösbar in ein Gegenlagergehäuse (nicht dargestellt) einsteckbar ist, einem Spiegel 7 und einer Lichtquelle 8. Die Lichtquelle 8 erhält ihre elektrische Stromversorgung durch die Fahrzeugelektrik, wobei die Führung bzw. der Verlauf der elektrischen Leiter im einzelnen nicht dargestellt ist.

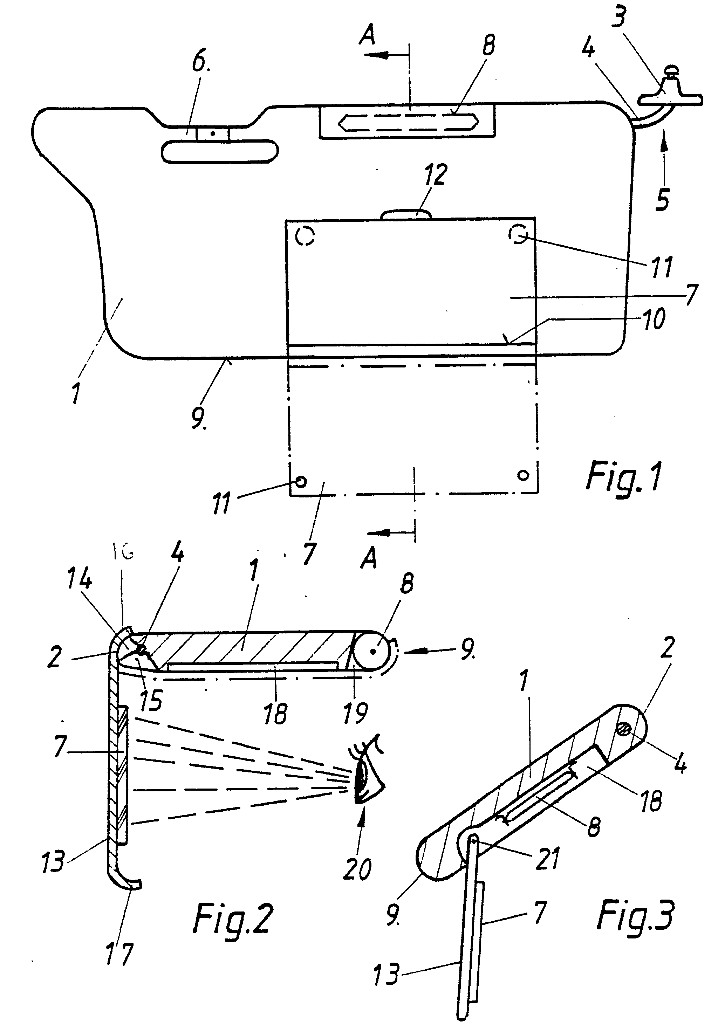

Beim Ausführungsbeispiel nach Fig. 1 ist ein großer Abstand zwischen der Lichtquelle 8 und dem Spiegel 7 dadurch gegeben, daß der Spiegel 7 nach unten klappbar im Bereich der unteren Längskante 9 des Sonnenblendenkörpers 1 angeordnet ist. Die Spiegelfläche ist den Augen des Betrachters entzogen, wenn sich der Spiegel 7 in seiner hochgeklappten Nichtgebrauchslage befindet, wie dies mit voll ausgezogenen Strichlinien dargestellt ist, und den Augen des Betrachters zugänglich, wenn der Spiegel 7, wie mit strichpunktierten Linien gezeigt, sich in seiner herun-tergeklappten Gebrauchslage befindet. Zur klapp-beweglichen Anordnung des Spiegels 7 kann ein elastisches Band 10 dienen, welches einerseits an der Rückseite des Spiegels, und zwar im Bereich seiner unteren Längskante, und andererseits am unteren Längskantenbereich des Sonnenblendenkörpers 1 fest, z. B. durch Kleben oder Schweißen, angeordnet ist. In der hochgeklappten Nichtgebrauchslage wird der Spiegel 7 durch zusammenwirkende Klipse, Druckknöpfe oder Magnete 11 am Sonnenblendenkörper 1 gehalten. Das Herunterklappen des Spiegels 7 wird durch eine im Sonnenblendenkörper 1 ausgeformte Griffmulde 12 erleichtert.

Das Ausführungsbeispiel nach Fig. 2 verdeutlicht einen Sonnenblendenkörper 1 mit einem Spiegel 7 und einer Lichtquelle 8, wobei der Spiegel 7 an einem Deckel 13 befestigt ist und wobei die Lichtquelle 8 im Bereich der, bezogen auf die Gebrauchslage des Sonnenblendenkörpers 1, unteren Längskante 9 des Sonnenblendenkörpers 1 sitzt. Der Deckel 13 ist mit Lagerärmchen 14 ausgebildet und durch diese unmittelbar an der Sonnenblendenachse 4 angelenkt. Im Sonnenblendenkörper 1 vorgesehene randoffene Schlitze 15 ermöglichen ein Verschwenken der Lagerärmchen 14. Der Deckel 13, der z. B. aus einem Kunststoff-Spritzgußteil bestehen und einstückig mit den Lagerärmchen 14 ausgebildet sein kann, trägt auf seiner dem Sonnenblendenkörper 1 zugewandten Seite den Spiegel 7, der an dem Deckel 13 durch Klammern od. dgl., vorzugsweise aber durch Kleben befestigt ist. Die anlenkseitige Längskante des Deckels 13 besitzt eine Abrundung 16, die die obere Längskante 2 des Sonnenblendenkörpers 1 umgreift und die Schlitze 15 abdeckt. Die andere freie Längskante des Deckels 13 ist ebenfalls mit einer Abrundung 17 ausgebildet, die über die untere Längskante 9 des Sonnenblendenkörpers 1 klipsbar ist, wie dies mit strichpunktierten Linien angedeutet ist. Der Sonnenblendenkörper 1 nach Fig. 2 weist eine den Abmessungen des Spiegels 7 angepaßte Ausnehmung 18 auf, in der der Spiegel 7 bei geschlossenem Deckel 13 eine Aufnahme findet. Die Lichtquelle 8, bei der es sich um ein Soffittenbirnchen handeln kann, sitzt in einer Ausnehmung 19 des Sonnenblendenkörpers 1, deren Längserstreckung kürzer als die Länge des Deckels 13 bemessen ist, so daß beim Aufklipsen des Deckels 13 auf die Längskante 9 des Sonnenblendenkörpers 1 keine Beeinträchtigung der Lichtquelle 8 erfolgt.

Fig. 2 zeigt den Sonnenblendenkörper 1 in seiner unter dem Dachhimmel eines Fahrzeuges befindlinchen Nichtgebrauchslage. Für die Inbenutzungnahme des Spiegels 7 wird lediglich der Deckel 13 aus seiner Klipshalterung gelöst und, wie mit stark ausgezogenen Linien dargestellt, nach unten geklappt. Danach liegt der Spiegel 7 auf einer etwa horizontalen Blickrichtung den Augen des Betrachters gegenüber, wie dies durch das in Fig. 2 angedeutete Auge 20 dargestellt ist. Die oberhalb der Augen 20 des Betrachters befindliche Lichtquelle 8 besitzt somit eine Anordnung, die zwar eine ausreichende Ausleuchtung des Gesichtsfeldes des Betrachters gewährleistet, die jedoch eine Blendung des Be-trachters ausschließt oder zumindest weitge-hendst mindert. Es ist auch denkbar, die Lichtquelle 8 im Bedarfsfalle bereichsweise gegenüber den Augen 20 abzuschirmen, wozu ein verschieb-bar oder verschwenkbar am Sonnenblendenkör-per 1 gelagerter Schirm (nicht gezeigt) vorgesehen sein kann. Eine besondere Maßnahme kann noch darin bestehen, daß beim Herunterklappen des Deckels 13 ein elektrischer Kontakt geschlossen und damit die Lichtquelle 8 automatisch eingeschaltet wird. Auch kann, beispielsweise über einen Federzug, ein automatisches Schließen des Deckels 13 erfolgen, wenn der Sonnenblendenkörper 1 in seine Blendschutzstellung geschwenkt wird.

Das in Fig. 3 dargestellte Ausführungsbeispiel, weist ebenfalls einen am Sonnenblendenkörper 1 angelenkten Deckel 13 auf, der im Gegensatz zum Ausführungsbeispiel nach Fig. 2 an der Breitseite des Sonnenblendenkörpers 1 sitzt, welche von der Windschutzscheibe abgewandt ist. Der Deckel 13 ist über eine Steckachse 21 mit dem Sonnenblendenkörper 1 verbunden und sitzt in einer Ausnehmung 18 des Sonnenblendenkörpers 1, in der auch die Lichtquelle 8 untergebracht ist. Damit der am Deckel 13 angeordnete Spiegel 7 eingesehen werden kann, wird zunächst der Sonnenblendenkörper 1 um die Sonnenblendenachse 4 nach unten geklappt, beispielsweise bis in die dargestellte Schräglage. Alsdann wird der Deckel 13 aus seiner vorzugsweise vorgesehenen Klipshalterung gelöst und ebenfalls, vorzugsweise über gleichzeitiges Anschalten der Lichtquelle 8, nach unten geklappt und kann hiernach behinderungsfrei eingesehen werden. Auch beim Ausführungsbeispiel nach Fig. 3 ist es von Vorteil, wenn der Deckel mit einem Federzug od. dgl. gekuppelt ist, durch den er automatisch mit dem Hochklappen des Sonnenblendenkörpers 1 geschlossen wird.

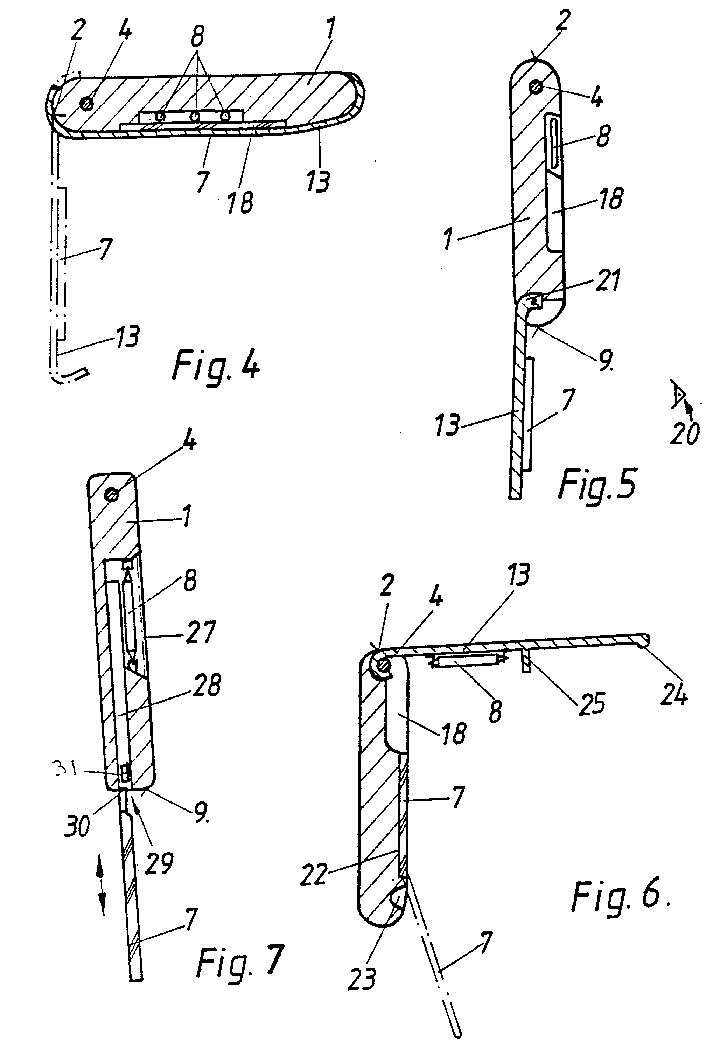

Fig. 4 zeigt eine Ausführungsform der Sonnenblende ähnlich der nach Fig. 3. Die Einsichtnahme in den an der Rückseite des Deckels 13 angebrachten Spiegel 7 wird auch hier durch lediglisches Herunterklappen des Deckels 13, wie strichpunktiert dargestellt, ermöglicht. Der Deckel 13 besitzt hier eine bereits anhand der Fig. 3 beschriebene Ausbildung. Der Sonnenblendenkörper 1 weist eine stufenförmig abgesetzte Ausnehmung 18 auf, wobei die erste Stufe zur Aufnahme des Spiegels 7 und die zweite Stufe zur Aufnahme von z. B. mehreren Lichtquellen 8 dient.

Beim Ausführungsbeispiel nach Fig. 5 ist ein besonders großer Abstand zwischen dem Spiegel 7 und der Lichtquelle 8 vorgesehen. Die hier gezeigte Lösung ist weitgehend mit der nach Fig. 1 vergleichbar. Im Bereich der unteren Längskante 9 des Sonnenblendenkörpers 1 ist über eine Steckachse 21 ein Deckel 13 angelenkt, der auf seiner Rückseite den Spiegel 7 trägt. Die Lichtquelle 8 sitzt in einer Ausnehmung 18 des Sonnenblendenkörpers 1, und zwar im nahen Abstand zur oberen Längskante 2. Die Ausnehmung 18 dient gleichzeitig auch zur Aufnahme des Spiegels 7, wenn sich dieser in seiner hochgeklappten Position befindet und kann auch eine die bündige Aufnahme des Deckels 13 ermöglichende Ausbildung besitzen. Das in Fig. 5 noch angedeutete Auge 2o verdeutlicht, daß es bei dieser erfindungsgemäßen Ausgestaltung der Sonnenblende normalerweise nicht zu einer Blendung durch die Lichtquelle 8 kommen kann, weil sich diese außerhalb des Sehbereiches der sich im Spiegel 7 betrachtenden Person befindet.

Der Sonnenblendenkörper 1 nach Fig. 6 weist eine Aussparung 22 mit einem fest darin eingesetzten (eingeklipsten, eingeklebten) Spiegel 7 und eine Ausnehmung 18 für die Aufnahme der hier an einem Deckel 13 angeordneten Lichtquelle 8 auf. Der Deckel 13 ist an der Sonnenblendenachse 4 angelenkt und mit Rastelementen ausgebildet, durch die er in seiner dargestellten Offenlage gehalten ist. In der heruntergeklappten Schließlage ist der Deckel 13 durch eine in eine Aufnahme 23 des Sonnenblendenkörpers 1 einführbare Schließraste 24 gehalten. Bei diesem Ausführungsbeispiel kann eine etwaige Blendung durch die Lichtquelle 8 wirkungsvoll durch einen ggf. höhenverstellbar ausgebildeten Blendschutzsteg 25, der sich zwischen den Augen des Betrachters und der Lichtquelle 8 am Deckel 13 befindet, verhindert werden.

In Fig. 6 ist weiterhin angedeutet, und zwar durch eine strichpunktierte Darstellung des Spiegels 7, daß dieser nach unten wegklappbar am Sonnenblendenkörper 1 angeordnet sein kann, beispielsweise in einer anhand der Fig. 1 oder 3 erläuterten Art. Durch ein Hochklappen des die Lichtquelle 8 tragenden Deckels 13 und ein Herunterklappen des Spiegels 7 wird ein besonders großer Abstand zwischen Lichtquelle 8 und Spiegel 7 erzielt.

Fig. 7 zeigt eine weitere Ausführungsform der Erfindung mit einem herausziehbar im Sonnenblendenkörper 1 gelagerten Spiegel 7. Die Lichtquelle 8 ist hier im oberen, der Sonnenblendenachse 4 benachbarten Bereich des Sonnenblendenkörpers 1 in einer Ausnehmung 28 angeordnet und ggf. durch ein strichpunktiert dargestelltes Lampenglas 27 abgedeckt. Für die ingebrauchnahme des Spiegels 7 wird dieser lediglich aus einer kassettenartigen Aufnahme 28, die innerhalb des Sonnenblendenkörpers 1 vorgesehen ist, herausgezogen. Demgemäß weist die Aufnahme 28 einen am unteren Längsrand 9 des Sonnenblendenkörpers 1 befindlichen Schlitz 29 auf.

Der Spiegel 7 wird innerhalb der Aufnahme 28 durch zumindest eine an einem Längsrand angreifende Feder 3o, die als Bügelfeder ausgebildet sein kann, gehalten. Über die Feder 3o kann auch ein elektrischer Kontakt für die Lichtquelle 8 betätigt werden, der beispielsweise auf eine Federentlastung anspricht.

Der Spiegel 7 wird zweckmäßigerweise von einem Querriegel 31 getragen, dessen Länge größer ist als die des Schlitzes 29, so daß der Spiegel 7 gegen Herausfallen aus der Aufnahme 28 gesichert ist.

**Patentansprüche**

1. Sonnenblende, insbesondere für Fahrzeuge, mit einem Sonnenblendenkörper (1), der mit einem Spiegel (7) und zumindest einer Lichtquelle (8) ausgerüstet ist, dadurch gekennzeichnet, daß der Spiegel (7) und die Lichtquelle (8) in ihrer Gebrauchslage relativ zueinander dadurch einen relativ großen Abstand in vertikaler Richtung einnehmen, daß der Spiegel (7) von der Lichtquelle (8) und/oder die Lichtquelle (8) vom Spiegel (7) wegbewegbar am Sonnenblendenkörper (1) angeordnet ist bzw. sind.

2. Sonnenblende nach Anspruch 1, dadurch gekennzeichnet, daß die Lichtquelle (8) sich in der Gebrauchslage des Spiegels (7) oberhalb desselben befindet.

3. Sonnenblende nach Anspruch 1 oder 2, dadurch gekennzeichnet, daß der Spiegel (7) von der Lichtquelle (8) wegklappbar am Sonnenblendenkörper (1) gelagert ist.

4. Sonnenblende nach einem oder mehreren der Ansprüche 1 bis 3, dadurch gekennzeichnet, daß der Spiegel (7) an der in der Gebrauchslage der Windschutzscheibe zugewandten Breitseite des Sonnenblendenkörpers (1) klappbar angeordnet ist.

5. Sonnenblende nach einem oder mehreren der Ansprüche 1 bis 3, dadurch gekennzeichnet, daß der Spiegel (7) an der in der Gebrauchslage von der Windschutzscheibe abgewandten Breitseite des Sonnenblendenkörpers (1) klappbar angeordnet ist.

6. Sonnenblende nach einem oder mehreren der Ansprüche 1 bis 5, dadurch gekennzeichnet, daß der Spiegel (7) an einem schwenkbeweglich am Sonnenblendenkörper (1) gelagerten Deckel (13) befestigt ist.

7. Sonnenblende nach Anspruch 6, dadurch gekennzeichnet, daß der Sonnenblendenkörper (1) eine den Spiegel (7) nebst Deckel (13) aufnehmende Ausnehmung (18) aufweist.

8. Sonnenblende nach einem oder mehreren der Ansprüche 1 bis 7, dadurch gekennzeichnet, daß der Spiegel (7) oder der den Spiegel tragende Deckel (13) im Bereich des der Lagerachse (4) des Sonnenblendenkörpers (1) abgewandten Längskante (9) des Sonnenblendenkörpers (1) klappbar gelagert ist.

9. Sonnenblende nach einem oder mehreren der Ansprüche 1 bis 7, dadurch gekennzeichnet, daß die Klappachse für den Spiegel (7) oder den den Spiegel (7) tragenden Deckel (13) mit der Lagerachse (4) des Sonnenblendenkörpers (1) zusammenfällt.

10. Sonnenblende nach Anspruch 1 oder 2, dadurch gekennzeichnet, daß die Lichtquelle (8) vom Spiegel (7) wegklappbar am Sonnenblendenkörper (1) gelagert ist.

11. Sonnenblende nach Anspruch 10, dadurch gekennzeichnet, daß die Lichtquelle (8) an einem schwenkbeweglich am Sonnenblendenkörper (1) gelagerten Deckel (13) befestigt ist.

12. Sonnenblende nach einem oder mehreren der Ansprüche 1 bis 11, dadurch gekennzeichnet, daß der Sonnenblendenkörper (1) eine die Lichtquelle (8) aufnehmende Ausnehmung (18, 19) aufweist.

13. Sonnenblende nach einem oder mehreren der Ansprüche 1 bis 12, dadurch gekennzeichnet, daß das Scharnier für die schwenkbewegliche Lagerung des Spiegels (7), des den Spiegel tragenden Deckels (13), der Lichtquelle (8) oder des die Lichtquelle (8) tragenden Deckels (13) mit einem elektrischen Ausschalter für die Lichtquelle (8) ausgerüstet ist.

14. Sonnenblende nach einem oder mehreren der Ansprüche 1 bis 13, dadurch gekennzeichnet, daß der Spiegel (7) innerhalb des Sonnenblendenkörpers (1) gelagert und aus einer Schlitzöffnung (29) an der unteren Längskante (9) des Sonnenblendenkörpers (1) herausziehbar ist.

## Claims

1. A sun visor, more particularly for vehicles, comprising a body (1) equipped with a mirror (7) and at least one light source (8), characterised in that the mirror (7) and the light source (8) are kept at a relatively large distance from one another vertically when in the operative position, in that the mirror (7) and light source (8) are disposed on the sun visor body (1) so that the light source (8) can be moved away from the mirror (7) or the mirror can be moved away from the light source.

2. A sun visor according to claim 1, characterised in that the light source (8) is disposed above the mirror (7) when the mirror is in the operating position.

3. A sun visor according to claim 1 or 2, characterised in that the mirror (7) is disposed on the sun visor body (1) so that it can be swung away from the light source (8).

4. A sun visor according to one or more of claims 1 to 3, characterised in that the mirror (7) is tiltably disposed on the wide side of the sun visor body (1) which faces the windscreen when in the operating position.

5. A sun visor according to one or more of claims 1 to 3, characterised in that the mirror (7) is tiltably disposed on the wide side of the sun visor body (1) facing away from the windscreen in the operating position.

6. A sun visor according to one or more of claims 1 to 5, characterised in that the mirror (7) is secured to a cover (13) pivotably mounted on the sun visor body (1).

7. A sun visor according to claim 6, characterised in that the sun visor body (1) has a recess (18) receiving the mirror (7) and cover (13).

8. A sun visor according to one or more of claims 1 to 7, characterised in that the mirror (7) or the cover (13) bearing the mirror is tiltably mounted near the longitudinal edge (9) of the body (1) facing away from the shaft (4) bearing the sun visor body (1).

9. A sun visor according to one or more of claims 1 to 7, characterised in that the shaft for tiltably bearing the mirror (7) or the cover (13) holding the mirror coincides with the shaft (14) bearing the sun visor body (1).

10. A sun visor according to claim 1 or 2, characterised in that the light source (8) is mounted on the body (1) so that it can be swung away from the mirror (7).

11. A sun visor according to claim 10, characterised in that the light source (8) is secured to a cover (13) pivotably mounted on the sun visor body (1).

12. A sun visor according to one or more of claims 1 to 11, characterised in that the body (1) has a recess (18, 19) receiving the light source (8).

13. A sun visor according to one or more of claims 1 to 12, characterised in that the hinge for pivotably mounting the mirror (7), the cover (13) bearing the mirror, the light source (8) or the cover (13) bearing the light source (8) is equipped with an electric cutout switch for the light source (8).

14. A sun visor according to one or more of claims 1 to 13, characterised in that the mirror (7) is mounted inside the sun visor body (1) and can be pulled out of a slot (29) on the lower longitudinal edge (9) of body 1.

## Revendications

1. Pare-soleil, notamment pour véhicules, comportant un corps de pare-soleil (1) équipé d'un miroir (7) et d'au moins une source lumineuse (8), caractérisé en ce que le miroir (7) et la source lumineuse (8), en position d'utilisation, sont relativement éloignés l'un de l'autre dans le sens vertical du fait que, sur le corps du pare-soleil (1), on peut éloigner le miroir (7) de la source lumineuse (8) et/ou éloigner la source lumineuse (8) du miroir (7).

2. Pare-soleil selon la revendication 1, caractérisé en ce que la source lumineuse (8) se trouve, dans la position d'utilisation du miroir (7), au dessus de celui-ci.

3. Pare-soleil selon la revendication 1 ou 2, caractérisé en ce que le miroir (7) est monté sur le corps de pare-soleil (1) de façon à pouvoir l'en éloigner en le rabattant.

4. Pare-soleil selon l'une ou plusieurs des revendications 1 à 3, caractérisé en ce que le miroir (7) est disposé rabattable sur le grand côté du corps de pare-soleil (1) tourné vers le pare-brise dans la position d'utilisation.

5. Pare-soleil selon l'une ou plusieurs des revendications 1 à 3, caractérisé en ce que le miroir (7) est disposé rabattable sur le grand côté du corps de pare-soleil (1) opposé au pare-brise dans la position d'utilisation.

6. Pare-soleil selon l'une ou plusieurs des revendications 1 à 5, caractérisé en ce que le miroir (7) est fixé sur un couvercle (13) monté à pivotement sur le corps de pare-soleil (1).

7. Pare-soleil selon la revendication 6, caractérisé en ce que le corps de pare-soleil (1) comporte une cavité (18) qui reçoit le miroir (7) avec le couvercle (13).

8. Pare-soleil selon l'une ou plusieurs des revendications 1 à 7, caractérisé en ce que le miroir (7) ou le couvercle (13) portant le miroir sont montés rabattables dans la zone du bord longitudinal (9) du corps de pare-soleil opposé à l'axe de pivotement (4) du corps de pare-soleil (1).

9. Pare-soleil selon l'une ou plusieurs des revendications 1 à 7, caractérisé en ce que l'axe de pivotement pour le miroir (7) ou le couvercle (13) portant le miroir (7) coïncide avec l'axe de pivotement (4) du corps de pare-soleil (1).

10. Pare-soleil selon la revendication 1 ou 2, caractérisé en ce que la source lumineuse (8) est montée sur le corps de pare-soleil (1) de façon à pouvoir la rabattre pour l'éloigner du miroir (7).

11. Pare-soleil selon la revendication 10, caractérisé en ce que la source lumineuse (8) est fixée sur un couvercle (13) monté pivotant sur le corps de pare-soleil (1).

12. Pare-soleil selon l'une ou plusieurs des revendications 1 à 11, caractérisé en ce que le corps de pare-soleil (1) comporte une cavité (18, 19) recevant la source lumineuse (8).

13. Pare-soleil selon l'une ou plusieurs des revendications 1 à 12, caractérisé en ce que la charnière permettant le pivotement du miroir (7), du couvercle (13) portant le miroir, de la source lumineuse (8) ou du couvercle (13) portant la source lumineuse (8) est équipée d'un interrupteur électrique pour la source lumineuse (8).

14. Pare-soleil selon l'une ou plusieurs des revendications 1 à 13, caractérisé en ce que le miroir (7) est monté à l'intérieur du corps de pare-soleil (1) et peut être tiré hors d'une fente (29) ménagée sur l'arête longitudinale inférieure (9) du corps de pare-soleil (1).

Fig.1

Fig.2

Fig.3

0 096 154

Fig. 4

Fig. 5

Fig. 7

Fig. 6.

2